(19) **Europäisches Patentamt**
**European Patent Office**
**Office européen des brevets**

(11) **EP 4 144 798 A1**

(12) **EUROPEAN PATENT APPLICATION**
published in accordance with Art. 153(4) EPC

(43) Date of publication:
**08.03.2023 Bulletin 2023/10**

(21) Application number: **21797912.9**

(22) Date of filing: **30.04.2021**

(51) International Patent Classification (IPC):
**C08L 65/00** (2006.01)    **C09K 3/00** (2006.01)
**B01J 13/18** (2006.01)

(52) Cooperative Patent Classification (CPC):
**B01J 13/16; B01J 13/18; C08J 9/32; C08K 3/013; C08K 3/18; C08K 3/34; C08L 65/00; C08L 101/02; C09K 3/00**

(86) International application number:
**PCT/JP2021/017197**

(87) International publication number:
**WO 2021/221160 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.05.2020   JP 2020081298**

(71) Applicant: **SEKISUI CHEMICAL CO., LTD.**
**530-0047 (JP)**

(72) Inventors:
• **MORITA, Hiroyuki**
  **Koka-shi, Shiga 528-8585 (JP)**
• **WAKIYA, Takeshi**
  **Mishima-gun, Osaka 618-0021 (JP)**
• **MATSUKUBO, Tatsuya**
  **Shunan-shi, Yamaguchi 746-0006 (JP)**
• **KANEKO, Yumi**
  **Shunan-shi, Yamaguchi 746-0006 (JP)**
• **OBINATA, Shuhei**
  **Mishima-gun, Osaka 618-0021 (JP)**

(74) Representative: **Cabinet Beau de Loménie**
**158, rue de l'Université**
**75340 Paris Cedex 07 (FR)**

(54) **THERMALLY EXPANDABLE MICROCAPSULES**

(57)    The present invention provides a thermally expandable microcapsule that has excellent heat resistance and compression resistance and that enables the production of a foam molded article that is less likely to undergo deterioration or appearance defects over a long period of time, as well as a foamable masterbatch and a foam molded article each produced using the thermally expandable microcapsule. Provided is a thermally expandable microcapsule including a shell and a volatile expansion agent as a core agent encapsulated by the shell, the shell containing a black material and a polymer compound.

EP 4 144 798 A1

**Description**

TECHNICAL FIELD

The present invention relates to a thermally expandable microcapsule that has excellent heat resistance and compression resistance and that enables the production of a foam molded article that is less likely to undergo deterioration or appearance defects over a long period of time, as well as to a foamable masterbatch and a foam molded article each produced using the thermally expandable microcapsule.

BACKGROUND ART

Thermally expandable microcapsules are used as design-imparting agents or weight-reducing agents in various applications. They are also used in foamable inks, wallpapers, and other coating materials for weight reduction.
A widely known thermally expandable microcapsule includes one which has a thermoplastic shell polymer filled with a volatile expansion agent that becomes gaseous at a temperature not higher than the softening point of the shell polymer.
For example, Patent Literature 1 discloses such a thermally expandable microcapsule. Patent Literature 1 discloses a thermally expandable microcapsule containing a volatile expansion agent encapsulated therein, wherein the microcapsule is produced by a method including: preparing an oily mixture liquid by mixing a monomer with a volatile expansion agent such as a low boiling point aliphatic hydrocarbon; and adding the oily mixture liquid and an oil-soluble polymerization catalyst to an aqueous dispersion medium containing a dispersant with stirring to perform suspension polymerization.
Patent Literature 2 discloses a thermally expandable microsphere that contains a polymer of a crosslinkable monomer having (meth)acryloyl groups and a reactive carbon-carbon double bond and having a molecular weight of 500 or more.

CITATION LIST

- Patent Literature

Patent Literature 1: JP S42-26524 B
Patent Literature 2: WO 2019/150951

SUMMARY OF INVENTION

- Technical problem

However, the thermally expandable microcapsules (thermally expandable microspheres) disclosed in Patent Literatures 1 and 2 have insufficient compression resistance at the shell particularly in the foaming step, making it difficult to produce a foam molded article having excellent foamability.
In addition, a foam molded article obtained from such thermally expandable microcapsules may undergo product deterioration (shrinking) with time or appearance defects particularly when it is a black foam molded article.
The present invention aims to provide a thermally expandable microcapsule that has excellent heat resistance and compression resistance and that enables the production of a foam molded article that is less likely to undergo deterioration or appearance defects over a long period of time, as well as a foamable masterbatch and a foam molded article each produced using the thermally expandable microcapsule.

- Solution to problem

The present invention relates to a thermally expandable microcapsule including a shell and a volatile expansion agent as a core agent encapsulated by the shell, the shell containing a black material and a polymer compound.
The present invention is described in detail below.
The shell constituting the thermally expandable microcapsule that is an embodiment of the present invention contains a black material.
The black material contained in the shell can increase the strength of the shell against melt kneading during molding and also can further increase light-shielding properties and appearance quality. The black material appears black by absorbing all rays of sunlight, including those in the visible light region. Typical black pigments absorb light in the visible light region (about 380 to 780 nm) to appear black, but they actually also absorb light in the near-infrared region, including the wavelength region from 800 to 1,400 nm, which greatly contributes to heat.

The lower limit of the OD value of the black material is preferably 1.5, and the upper limit thereof is preferably 5.0. The black material having an OD value in the range can provide a black coating film and a black matrix having both high light-shielding properties and jetness.

The OD value of the black material means an OD value determined by measuring an acrylic resin (coating film thickness 1 $\mu$m) containing the black material in an amount of 50% by weight.

The optical density (OD value) herein refers to the value X represented by $X = -\log(I_T/I_0)$, wherein $I_0$ is the intensity of light incident on an optical density varying element and $I_T$ is the intensity of light transmitted through the element.

The optical density (OD value) can be measured using a chroma meter, a Macbeth densitometer, or the like.

Examples of the black material include black pigments, black dyes, and black conductive polymers. In particular, the black material preferably contains at least one selected from the group consisting of a black pigment, a black dye, and a black conductive polymer. Preferred among these is a black pigment.

Examples of the black pigment include inorganic black pigments such as carbonous black pigments and oxide black pigments, as well as organic black pigments. In particular, the black pigment is preferably at least one selected from the group consisting of a carbonous black pigment and an oxide black pigment.

Examples of the carbonous black pigment include carbon black, graphite, activated carbon, and graphene.

Examples of the oxide black pigment include titanium black, iron oxide, magnetite, and copper(I) oxide (cuprous oxide), as well as complex oxide black pigments containing the following as main metal components: copper and chromium; copper and manganese; copper, iron, and manganese; or cobalt, chromium, and iron.

Examples of the organic black pigment include aniline black (C.I. Pigment Black 1).

More preferred among these is carbon black because it has excellent dispersibility in resin as well as excellent heat resistance, and also because it can impart a homogenous black color.

Examples of the black dye include inorganic black dyes and organic black dyes. Preferred among these are organic black dyes.

Examples of the inorganic black dyes include metal complex salt azo black dyes.

Examples of the metal complex salt azo black dyes include NeoSuper Black C-832 (trade name Solvent Black 27, produced by Chuo Synthetic Chemical Co., Ltd.).

Examples of the organic black dyes include disazo black dyes, azine black dyes, phthalocyanine black dyes, anthraquinone black dyes, and indigoid black dyes.

Examples of the disazo black dyes include Chuo Sudan Black 141 (trade name Solvent Black 3, produced by Chuo Synthetic Chemical Co., Ltd.).

Examples of the azine black dyes include ChuoBrack F5 (trade name Solvent Black 7, produced by Chuo Synthetic Chemical Co., Ltd.).

Examples of the black conductive polymer include polythiophene, polydopamine, polypyrrole, polyaniline, polyphenylenevinylene, polyphenylene, polyacetylene, polyquinoxaline, polyoxadiazole, polybenzothiadiazole, and polymers having two or more of these conductive skeletons. Preferred among these are polythiophene and derivatives thereof. Particularly preferred are poly(3,4-ethylenedioxythiophene) [PEDOT], poly(3,4-ethylenedioxythiophene)-poly(styrene sulfonate) [PEDOT/PSS], and polythienothiophene.

Preferred among the above black materials are black materials in the form of fine particles (black fine particles).

The black fine particles preferably have an average particle size of 1 um or less, more preferably 10 to 500 nm. Black fine particles having an average particle size in the range can be dispersed in resin and provide a uniform color (black).

The average particle size can be measured by observation using a particle size distribution analyzer (Nanotrac 150, produced by MicrotracBEL Corp.).

The lower limit of the black material content relative to the thermally expandable microcapsule as a whole is preferably 0.01% by weight, and the upper limit thereof is preferably 30% by weight. When the black material content is 0.01% by weight or more, fusion of thermally expandable microcapsules in resin during molding can be reduced. When the black material content is 30% by weight or less, the black material can increase the strength of the shell against melt kneading during molding and also can further increase light-shielding properties and appearance quality. The lower limit is more preferably 0.3% by weight, and the upper limit is more preferably 150 by weight, still more preferably 10% by weight, further preferably 7% by weight.

The black material content can be determined as follows, for example. The thermally expandable microcapsule is heated in a nitrogen atmosphere to 600°C at 10°C/min, held for 10 minutes, cooled to 400°C at 10°C/min, and held for 10 minutes. The atmosphere is changed to the air, and the thermally expandable microcapsule is heated in the air to 1,000°C and held at 1,000°C for 10 minutes. At this time, the weight loss from 400°C to 1,000°C is measured to determine the black material content.

The black material preferably has a specific surface area of 500 m$^2$/g or less, more preferably 5 to 300 m$^2$/g. A specific surface area in the range allows the black material to disperse in resin and to provide a uniform color (black color).

The specific surface area can be measured using a surface area/pore size analyzer (NOVA 4200e, produced by Quantachrome Instruments) by measuring an adsorption isotherm of nitrogen and calculating, from the measurement results, the specific surface area of the black material in accordance with the BET method.

The shell constituting the thermally expandable microcapsule that is an embodiment of the present invention contains a polymer compound.

The polymer compound is preferably a polymer of a monomer composition containing a nitrile monomer and a carboxy group-containing monomer.

Examples of the nitrile monomer include, but not limited to, acrylonitrile, methacrylonitrile, α-chloroacrylonitrile, α-ethoxyacrylonitrile, fumaronitrile, and mixtures thereof. Particularly preferred among these are acrylonitrile and methacrylonitrile. These may be used alone or in combination of two or more thereof.

The lower limit of the amount of the nitrile monomer in the monomer composition is preferably 40% by weight, and the upper limit thereof is preferably 90% by weight. When the amount is 40% by weight or more, the shell can have increased gas barrier properties to improve the expansion ratio. When the amount is 90% by weight or less, heat resistance can be improved, and yellowing can be prevented. The lower limit is more preferably 50% by weight, and the upper limit is more preferably 80% by weight.

The carboxy group-containing monomer may be, for example, a C3-C8 radically polymerizable unsaturated carboxylic acid monomer having a carboxy group.

Specific examples thereof include: unsaturated dicarboxylic acids and anhydrides thereof; and unsaturated dicarboxylic acid monoesters and derivatives thereof.
These may be used alone or in combination of two or more thereof.

Examples of unsaturated dicarboxylic acids include unsaturated monocarboxylic acids such as acrylic acid, methacrylic acid, ethacrylic acid, crotonic acid, and cinnamic acid, maleic acid, itaconic acid, fumaric acid, citraconic acid, and chloromaleic acid.

Examples of the unsaturated dicarboxylic acid monoesters include monomethyl maleate, monoethyl maleate, monobutyl maleate, monomethyl fumarate, monoethyl fumarate, monomethyl itaconate, monoethyl itaconate, and monobutyl itaconate.

Particularly preferred among them are acrylic acid, methacrylic acid, maleic acid, maleic anhydride, and itaconic acid.

The lower limit of the amount of the carboxy group-containing monomer in the monomer composition is preferably 5% by weight, and the upper limit thereof is preferably 50% by weight. When the amount is 5% by weight or more, the maximum foaming temperature can be increased. When the amount is 50% by weight or less, the expansion ratio can be improved. The lower limit is more preferably 10% by weight, and the upper limit is more preferably 30% by weight.

The monomer composition preferably contains a crosslinkable monomer having two or more double bonds in the molecule. The crosslinkable monomer serves as a crosslinking agent. When the monomer composition contains the crosslinkable monomer, shell strength can be enhanced, so that the cell wall is less likely to break in thermal expansion.

Examples of the crosslinkable monomer include monomers having two or more radically polymerizable double bonds. Specific examples thereof include divinyl benzene, di(meth)acrylates, and tri- or higher functional (meth)acrylates.

Examples of di(meth)acrylates include ethylene glycol di(meth)acrylate, diethylene glycol di(meth)acrylate, triethylene glycol di(meth)acrylate, propylene glycol di(meth)acrylate, and 1,4-butanediol di(meth)acrylate. Examples also include 1,6-hexanediol di(meth)acrylate, 1,9-nonanediol di(meth)acrylate, glycerol di(meth)acrylate, trimethylolpropane di(meth)acrylate, and dimethylol-tricyclodecane di(meth)acrylate. Di(meth)acrylate of polyethylene glycol having a weight average molecular weight of 200 to 600 may also be used.

Examples of trifunctional (meth)acrylates include trimethylolpropane tri(meth)acrylate, ethylene oxide-modified trimethylolpropane tri(meth)acrylate, pentaerythritol tri(meth)acrylate, and triallylformal tri(meth)acrylate. Examples of tetra- or higher functional (meth)acrylates include pentaerythritol tetra(meth)acrylate and dipentaerythritol hexa(meth)acrylate.

Of these, trifunctional (meth)acrylates such as trimethylolpropane tri(meth)acrylate and bifunctional (meth)acrylates such as polyethylene glycol provide relatively uniform crosslinking in a shell mainly containing acrylonitrile.

The lower limit of the amount of the crosslinkable monomer in the monomer composition is preferably 0.1% by weight, and the upper limit thereof is preferably 1.0% by weight. When the amount of the crosslinkable monomer is 0.1% by weight or more, the crosslinkable monomer can sufficiently exhibit the effect as a crosslinking agent. When the amount of the crosslinkable monomer is 1.0% by weight or less, the expansion ratio of the thermally expandable microcapsule can be improved. The lower limit of the amount of the crosslinkable monomer is more preferably 0.15% by weight, and the upper limit thereof is more preferably 0.9% by weight.

The monomer composition preferably contains a different monomer in addition to the nitrile monomer, the carboxy group-containing monomer, and the crosslinkable monomer. When the monomer composition contains the different monomer, the thermally expandable microcapsule has good compatibility with a matrix resin such as a thermoplastic resin, so that a foam molded article formed using the thermally expandable microcapsule can have excellent appearance.

Examples of the different monomer include (meth)acrylates, as well as vinyl monomers such as vinyl chloride, vinylidene chloride, vinyl acetate, and styrene. These may be used alone or in combination of two or more thereof. Preferred among these are (meth)acrylates. Particularly preferred are alkyl methacrylates such as methyl methacrylate, ethyl methacrylate, and n-butyl methacrylate and alicyclic/aromatic ring-containing/heterocyclic ring-containing methacrylates such as cyclohexyl methacrylate, benzyl methacrylate, and isobornyl methacrylate.

The lower limit of the amount of the different monomer in the monomer composition is preferably 0.1% by weight, and the upper limit thereof is preferably 25% by weight. When the amount of the different monomer is 0.1% by weight or more, a composition containing the thermally expandable microcapsule can have improved dispersibility. When the amount is 25% by weight or less, the cell wall can have improved gas barrier properties to provide better thermal expandability. The lower limit of the amount of the different monomer is more preferably 0.3% by weight, and the upper limit thereof is more preferably 22% by weight.

The monomer composition may contain a thermosetting resin in addition to the nitrile monomer, the carboxy group-containing monomer, the crosslinkable monomer, and the different monomer.

Examples of the thermosetting resin include epoxy resins, phenolic resins, melamine resins, urea resins, polyimide resins, and bismaleimide resins. Preferred among these are epoxy resins and phenolic resins.

Examples of the epoxy resins include, but not limited to, bisphenol A epoxy resins, bisphenol F epoxy resins, phenol novolac epoxy resins, cresol novolac epoxy resins, dicyclopentadiene epoxy resins, and glycidylamine epoxy resins.

Examples of the phenolic resins include novolac phenolic resins, resol phenolic resins, and benzylic ether phenolic resins. Preferred among these are novolac phenolic resins.

The thermosetting resin preferably has in the molecule two or more functional groups that react with a carboxy group. The presence of two or more functional groups that react with a carboxy group can enhance the curability of the thermosetting resin. Particularly when the monomer composition contains a carboxy group-containing monomer, the carboxy group and the thermosetting resin can be more firmly bonded to each other due to the heat in thermal foaming, thus greatly improving the heat resistance and durability.

The thermosetting resin preferably does not have a radically polymerizable double bond.

Examples of the functional groups that react with a carboxy group include a glycidyl group, a phenol group, a methylol group, and an amino group. Preferred among these is a glycidyl group. The functional groups that react with a carboxy group may be of the same type or two or more types.

The lower limit of the amount of the thermosetting resin in the monomer composition is preferably 0.01% by weight, and the upper limit thereof is preferably 30% by weight.

When the amount of the thermosetting resin is 0.01% by weight or more, the compression resistance in thermal foaming can be improved. When the amount of the thermosetting resin is 30% by weight or less, the shell can have better gas barrier properties, which improve foaming properties. The lower limit is more preferably 0.1% by weight, and the upper limit is more preferably 15% by weight.

A polymerization initiator is added to the monomer composition to polymerize the monomers.

Examples of suitable polymerization initiators include dialkyl peroxides, diacyl peroxides, peroxy esters, peroxydicarbonates, and azo compounds.

Specific examples include: dialkyl peroxides such as methyl ethyl peroxide, di-t-butyl peroxide, and dicumyl peroxide; and diacyl peroxides such as isobutyl peroxide, benzoyl peroxide, 2,4-dichlorobenzoyl peroxide, and 3,5,5-trimethylhexanoyl peroxide.

Examples also include t-butyl peroxypivalate, t-hexyl peroxypivalate, t-butyl peroxyneodecanoate, t-hexyl peroxyneodecanoate, 1-cyclohexyl-1-methylethyl peroxyneodecanoate, and 1,1,3,3-tetramethylbutyl peroxyneodecanoate.

Examples also include: peroxy esters such as cumyl peroxyneodecanoate and ($\alpha,\alpha$-bis-neodecanoylperoxy)diisopropylbenzene; bis(4-t-butylcyclohexyl)peroxydicarbonate; di-n-propyl-oxydicarbonate; and diisopropyl peroxydicarbonate.

Examples also include peroxydicarbonates such as di(2-ethylethylperoxy)dicarbonate, dimethoxybutyl peroxydicarbonate, and di(3-methyl-3-methoxybutylperoxy)dicarbonate.

Examples also include azo compounds such as 2,2'-azobisisobutyronitrile, 2,2'-azobis(4-methoxy-2,4-dimethylvaleronitrile, 2,2'-azobis(2,4-dimethylvaleronitrile), and 1,1'-azobis(1-cyclohexanecarbonitrile).

The lower limit of the weight average molecular weight of the polymer compound constituting the shell is preferably 100,000 and the upper limit thereof is preferably 2,000,000. When the weight average molecular weight is less than 100,000, the shell may have decreased strength. When the weight average molecular weight is more than 2,000,000, the shell may have too high strength, which may decrease the expansion ratio.

The shell constituting the thermally expandable microcapsule that is an embodiment of the present invention preferably further contains at least one inorganic compound selected from the group consisting of a Si compound and a Mg compound.

The shell containing the inorganic compound can reduce fusion of thermally expandable microcapsules in resin during molding.

The inorganic compound is different from the above black material.

The Si compound and Mg compound preferably contain an oxide, hydroxide, carbonate, or hydrogencarbonate of silicon or magnesium.

These Si compounds and Mg compounds may be used alone or in combination of two or more thereof.

Examples of the Si compound include colloidal silica, silica sol, sodium silicate solution No. 3, sodium orthosilicate, and sodium metasilicate. Preferred among these is colloidal silica.

Examples of the Mg compound include magnesium oxide, magnesium hydroxide, magnesium hydroxide oxide, hydrotalcite, dihydrotalcite, magnesium carbonate, basic magnesium carbonate, calcium magnesium carbonate, magnesium phosphate, magnesium hydrogen phosphate, magnesium pyrophosphate, and magnesium borate. Preferred among these is magnesium hydroxide.

Examples of other inorganic compounds that may be added include calcium phosphate, aluminum hydroxide, ferric hydroxide, barium sulfate, calcium sulfate, sodium sulfate, calcium oxalate, calcium carbonate, and barium carbonate. If necessary, an inorganic salt (e.g., sodium chloride or sodium sulfate), an alkali metal nitrite, stannous chloride, stannic chloride, potassium bichromate, and/or the like may be added.

The inorganic compound is preferably in the form of fine particles.

The inorganic compound in the form of fine particles preferably has a primary particle size of 0.5 um or less, more preferably 5 to 100 nm (0.1 $\mu$m). The inorganic compound having a primary particle size in the above range can reduce fusion of thermally expandable microcapsules in resin during molding. The primary particle size can be measured by observation using a scanning electron microscope (Regulus8220, produced by Hitachi High-Technologies Corporation).

The inorganic compound content relative to the thermally expandable microcapsule as a whole is 0.01% by weight. The upper limit of the inorganic compound content is preferably 7% by weight. When the inorganic compound content is 0.01% by weight or more, fusion of thermally expandable microcapsules in resin during molding can be reduced. When the inorganic compound content is 7% by weight or less, the dispersibility in resin during molding can be further increased. The lower limit is more preferably 0.3% by weight, and the upper limit is more preferably 5% by weight.

The inorganic compound content can be calculated from the weights of the monomer composition, the volatile expansion agent, and the black material that form the thermally expandable microcapsule.

The weight ratio of the inorganic compound to the black material (inorganic compound/black material) is preferably 0.001 to 400. When the weight ratio is 0.001 or more, fusion of thermally expandable microcapsules in resin during molding can be reduced. When the weight ratio is 400 or less, the dispersibility in resin during molding can further be increased. In addition, light-shielding properties and appearance quality can further be increased. The lower limit is more preferably 0.3, still more preferably 0.5, and the upper limit is more preferably 300, still more preferably 200, further preferably 100, particularly preferably 90, especially preferably 80.

In the present invention, the black material and the inorganic compound may be present on the surface of the thermally expandable microcapsule or within the thermally expandable microcapsule. The black material and the inorganic compound are preferably contained within the shell of the thermally expandable microcapsule. In a suitable embodiment of the present invention, the black material is preferably contained within the shell. When the black material is contained within the shell, the black material is less likely to fall off, allowing a foam to have good appearance. In addition, foamability can be easily maintained high. Also preferably, the thermally expandable microcapsule has an outermost layer and the outermost layer contains the black material and the inorganic compound. Such a structure can further increase the dispersibility in resin during molding.

The position of the black material and the inorganic compound can be determined using a transmission electron microscope or the like after preparing a thin film passing near the centers of the thermally expandable microcapsules dispersed in an embedding resin.

The shell may contain a metal cation. When the shell contains a metal cation and the copolymer constituting the shell contains carboxy groups, the metal cation reacts with the carboxy groups to cause ionic crosslinking of the copolymer. This improves heat resistance, resulting in a thermally expandable microcapsule that neither breaks nor shrinks over a long period of time in a high-temperature range. In addition, the modulus of elasticity of the shell is less likely to decrease in a high-temperature range, so that the thermally expandable microcapsule neither breaks nor shrink during molding processing in which strong shear force is applied, such as knead molding, calender molding, extrusion molding, or injection molding.

The ionic crosslinking means formation of a crosslink between free carboxy groups present as side chains of the copolymer. The number of carboxy groups coordinated per valence of the metal cation depends on the type of the metal.

Any metal cation may be used as long as it reacts with the carboxy groups of the copolymer to ionically crosslink the copolymer. Examples include Li, Na, K, Zn, Mg, Ca, Ba, Sr, Mn, Al, Ti, Ru, Fe, Ni, Cu, Cs, Sn, Cr, and Pb ions. These may be used alone or in combination of two or more thereof. Preferred among these are Ca, Zn, and Al ions. A Zn ion is particularly suitable.

When two or more metal cations are used, any combination may be used. Preferably, an ion of an alkali metal and a metal cation other than the alkali metal are used in combination. The ion of the alkali metal activates a functional group such as a carboxy group, and thus can promote reaction of the metal cation other than the alkali metal with the carboxy groups of the copolymer.

Examples of the alkali metal include Na, K, and Li.

The shell may further contain a stabilizer, an ultraviolet absorber, an antioxidant, an antistatic agent, a flame retardant, a silane coupling agent, a colorant, and/or the like, if necessary.

The thermally expandable microcapsule that is an embodiment of the present invention includes a volatile expansion agent as a core agent encapsulated by the shell. The volatile expansion agent is a substance that becomes gaseous at a temperature not higher than the softening point of the polymer constituting the shell. The volatile expansion agent is preferably a low-boiling-point organic solvent.

Examples of the volatile expansion agent include low molecular weight hydrocarbons such as ethane, ethylene, propane, propene, n-butane, isobutane, butene, isobutene, n-pentane, isopentane, neopentane, n-hexane, heptane, petroleum ether, isooctane, octane, decane, isododecane, dodecane, and hexadecane.

Examples also include: chlorofluorocarbons such as $CCl_3F$, $CCl_2F_2$, $CClF_3$, and $CClF_2\text{-}CClF_2$; tetraalkylsilanes such as tetramethylsilane, trimethylethylsilane, trimethylisopropylsilane, and trimethyl-n-propylsilane. In particular, isobutane, n-butane, n-pentane, isopentane, n-hexane, isooctane, isododecane, and mixtures of these are preferred. These volatile expansion agents may be used alone or in combination of two or more thereof.

The volatile expansion agent may be a heat-decomposable compound that is heat-decomposable into a gaseous form by heat.

For the thermally expandable microcapsule that is an embodiment of the present invention, among the above volatile expansion agents, a low-boiling-point hydrocarbon having a carbon number of 5 or less is preferably used. With such a hydrocarbon, the thermally expandable microcapsule can have a high expansion ratio and quickly start foaming.

The volatile expansion agent may be a heat-decomposable compound that is heat-decomposable into a gaseous form by heat.

The thermally expandable microcapsule that is an embodiment of the present invention preferably has an optical density (OD value) of 0.5 or more. When the optical density (OD value) is 0.5 or more, a black coating film and a black matrix having both high light-shielding properties and jetness can be obtained. The lower limit is more preferably 0.8, and the upper limit preferably is 1.6.

The optical density (OD value) can be measured with a Macbeth densitometer or the like.

The lower limit of the ash content of the thermally expandable microcapsule of the present invention after heating at 750°C for 180 minutes is preferably 0.1% by weight, and the upper limit thereof is preferably 7% by weight. When the ash content is in the range, the thermally expandable microcapsule can ensure foamability and compression resistance while achieving excellent appearance quality.

The ash content herein is calculated from the weight of the thermally expandable microcapsule before heating and the weight of the ash after heating at 750°C for 180 minutes.

The ash content serves as an index of the amount of the black material and the inorganic material contained in the thermally expandable microcapsule.

The lower limit of the maximum foaming temperature (Tmax) of the thermally expandable microcapsule that is an embodiment of the present invention is preferably 190°C. A maximum foaming temperature (Tmax) of 190°C or higher can lead to high heat resistance, so that breaking and shrinking of the thermally expandable microcapsule can be prevented when a composition containing the thermally expandable microcapsule is applied in a high-temperature range. In addition, such thermally expandable microcapsules are less likely to aggregate during application, thus leading to good appearance. The lower limit is more preferably 200°C, and the upper limit is more preferably 240°C.

The maximum foaming temperature as used herein means a temperature at which the thermally expandable microcapsule reaches its maximum diameter (maximum displacement) when the diameter is measured while the microcapsule is heated from room temperature.

The lower limit of the maximum displacement (Dmax) of the thermally expandable microcapsule that is an embodiment of the present invention is preferably 10 um as measured by thermomechanical analysis. The thermally expandable microcapsule having a maximum displacement (Dmax) of less than 10 um may have a low expansion ratio and may fail to achieve desired foamability. The lower limit is more preferably 20 um, still more preferably 100 um, further preferably 300 um. The upper limit of the maximum displacement is preferably 2,000 um, more preferably 1,800 um, still more preferably 1,500 um.

The maximum displacement means the value of displacement at which a predetermined amount of thermally expandable microcapsules reach their maximum diameter as a whole when the diameters of the predetermined amount of thermally expandable microcapsules are measured while the microcapsules are heated from room temperature.

The upper limit of the foaming starting temperature (Ts) is preferably 175°C. A foaming starting temperature (Ts) of 175°C or lower makes foaming easier, allowing a desired expansion ratio to be achieved. The lower limit of the foaming starting temperature (Ts) is preferably 130°C, and the upper limit thereof is more preferably 170°C.

The lower limit of the volume average particle size of the thermally expandable microcapsule that is an embodiment of the present invention is preferably 5 um, and the upper limit thereof is preferably 45 um. When the volume average particle size is less than 5 um, the resulting molded article has too small cells, which may result in an insufficient expansion ratio. When the volume average particle size is more than 45 um, the resulting coated article may have too large cells and cause an appearance issue. The lower limit is more preferably 10 um, and the upper limit is more preferably 35 um.

The volume average particle size of the thermally expandable microcapsule can be measured by a laser diffraction/scattering particle size distribution analyzer or the like.

The method of producing the thermally expandable microcapsule that is an embodiment of the present invention is not limited. For example, the thermally expandable microcapsule may be produced through the steps of: preparing an aqueous medium containing the black material and the inorganic material; dispersing, in the aqueous dispersion medium, an oily mixture liquid containing the monomer composition and the volatile expansion agent; and polymerizing the monomers.

The monomer composition may contain the nitrile monomer, carboxy group-containing monomer, crosslinkable monomer, and different monomer described above.

To produce the thermally expandable microcapsule that is an embodiment of the present invention, first, the step of preparing an aqueous dispersion medium is performed. Specifically, for example, water, the black material, the inorganic compound, and optionally an auxiliary stabilizer are put into a polymerization reaction vessel to prepare an aqueous dispersion medium containing the black material and the inorganic compound.

Examples of the auxiliary stabilizer include condensation products of diethanolamine and aliphatic dicarboxylic acids and condensation products of urea and formaldehyde. Examples also include polyvinylpyrrolidone, polyethylene oxide, polyethyleneimine, tetramethylammonium hydroxide, gelatin, methylcellulose, polyvinyl alcohol, dioctyl sulfosuccinate, sorbitan esters, and emulsifiers.

In addition to the auxiliary stabilizer, a condensation product and/or a water-soluble nitrogen compound may be added.

The condensation product is preferably a condensation product of diethanolamine and an aliphatic dicarboxylic acid, particularly preferably a condensation product of diethanolamine and adipic acid or a condensation product of diethanolamine and itaconic acid.

Examples of the water-soluble nitrogen compound include polyvinylpyrrolidone, polyethyleneimine, polyoxyethylenealkylamine, and polydialkylaminoalkyl (meth)acrylates typified by polydimethylaminoethyl methacrylate and polydimethylaminoethyl acrylate. Examples also include polydialkylaminoalkyl(meth)acrylamides typified by polydimethylaminopropylacrylamide and polydimethylaminopropylmethacrylamide, polyacrylamide, polycationic acrylamide, polyamine sulfone, and polyallylamine. Preferred among them is polyvinylpyrrolidone.

The aqueous dispersion medium containing the black material, the inorganic compound, the auxiliary stabilizer, and optionally a dispersant is prepared by mixing the materials in deionized water. The pH of the aqueous phase at this time is appropriately determined according to the types of the black material, inorganic compound, and auxiliary stabilizer used. For example, when the inorganic compound used is a Si compound such as colloidal silica, an acidic aqueous dispersion medium is used for polymerization. The aqueous dispersion medium may be made acidic by optionally adding an acid such as hydrochloric acid to adjust the system to a pH of 3 to 4. When the inorganic compound used is a Mg compound such as magnesium hydroxide or calcium phosphate, an alkaline aqueous dispersion medium adjusted to a pH of 8 to 11 is used for polymerization.

In the method of producing the thermally expandable microcapsule, next, the step of dispersing an oily mixture liquid in the aqueous dispersion medium is performed. The oily mixture liquid contains the monomer composition and the volatile expansion agent.

Specifically, for example, an oily mixture liquid containing the monomer composition and the volatile expansion agent is dispersed in the aqueous dispersion medium. In this step, the monomer composition and the volatile expansion agent may be separately added to the aqueous dispersion medium to prepare the oily mixture liquid in the aqueous dispersion medium. Typically, however, they are mixed in advance to form the oily mixture liquid, and the obtained oily mixture liquid is added to the aqueous dispersion medium. In this case, the oily mixture liquid and the aqueous dispersion medium may be prepared in separate containers in advance, mixed in another container with stirring to disperse the oily mixture liquid in the aqueous dispersion medium, and then added to the polymerization reaction vessel. In this step, the inorganic compound is present at the interface between the oil droplets made of the oily mixture liquid and the aqueous dispersion medium. As a result, the resulting thermally expandable microcapsule can have the inorganic compound on the surface thereof.

The monomers are polymerized using a polymerization initiator. The polymerization initiator may be added to the oily mixture liquid in advance, or may be added after the aqueous dispersion medium and the oily mixture liquid are mixed with stirring in the polymerization reaction vessel.

The above step may be performed by adding the black material and optionally the dispersant not to the aqueous dispersion medium but to the monomer composition. In this case, the black material used can be present within the thermally expandable microcapsule.

The oily mixture liquid may be emulsified and dispersed at a predetermined particle size in the aqueous dispersion medium by, for example, a method including stirring with a homomixer (e.g., produced by Tokushu Kika Kogyo Co., Ltd.), or a method including passing the oily mixture liquid and the aqueous dispersion medium through a static dispersion apparatus such as a line mixer or an element-type static dispersion machine.

Here, the aqueous dispersion medium and the polymerizable mixture may be separately fed to the static dispersion apparatus, or a dispersion obtained by mixing and stirring in advance may be fed to the dispersion apparatus.

The thermally expandable microcapsule that is an embodiment of the present invention can be produced by performing the step of polymerizing the monomers by heating the dispersion obtained through the above steps, and a washing step. The thermally expandable microcapsule produced by such a method has a high maximum foaming temperature and excellent heat resistance, and neither breaks nor shrinks during application in a high temperature range.

The present invention also encompasses a foamable masterbatch containing the thermally expandable microcapsule and a thermoplastic resin (base resin).

The base resin may be any thermoplastic resin and may be a thermoplastic resin used in typical foam molding. Specific examples of the thermoplastic resin include low density polyethylene (LDPE), polyolefins such as polypropylene (PP), ethylene-vinyl acetate copolymers (EVA), vinyl chloride, polystyrene, thermoplastic elastomers, and ethylene-methyl methacrylate copolymers (EMMA).

Preferred among these are LDPE, EVA, and EMMA because they have low melting points and thus are easy to process. These may be used alone or in combination of two or more thereof.

The foamable masterbatch may contain any amount of the thermally expandable microcapsule. The lower limit of the amount relative to 100 parts by weight of the thermoplastic resin is preferably 10 parts by weight and the upper limit thereof is preferably 90 parts by weight.

The method of producing the foamable masterbatch is not limited. For example, the following method may be used. Raw materials such as the base resin (e.g., thermoplastic resin) and additives are kneaded in advance in a corotating twin screw extruder or the like. Subsequently, they are heated to a predetermined temperature, and a foaming agent such as the thermally expandable microcapsule is added, followed by further kneading. The resulting kneaded product is cut into pellets having a desired size using a pelletizer to form a masterbatch. Alternatively, raw materials such as the base resin (e.g., thermoplastic resin) and the thermally expandable microcapsule may be kneaded in a batch-type kneader and then granulated in a granulator to form masterbatch in the form of pellets.

The kneader may be any kneader capable of kneading the raw materials without breaking thermally expandable microcapsules. Examples thereof include a pressure kneader and a Banbury mixer.

The present invention also encompasses a foam molded article produced using the thermally expandable microcapsule or the foamable masterbatch. In particular, since the thermally expandable microcapsule is suitable for applications that involve post-treatment at high temperature, a foam sheet with high appearance quality, such as one having protrusions and depressions, can be obtained and suitably used in applications such as housing wallpaper.

Specifically, the foam molded article can be obtained by kneading the thermally expandable microcapsule or the foamable masterbatch containing the thermally expandable microcapsule with a matrix resin and molding the kneaded product.

The present invention can improve gas barrier properties to achieve better durability in thermal expansion while also improving the expansion ratio and heat resistance.

The method of producing the foam molded article is not limited. Examples thereof include knead molding, calender molding, extrusion molding, and injection molding. The injection molding may be performed by any method. Examples of the method include a short shot method, in which part of a resin material is placed in a mold and foamed, and a core back method, in which a mold is fully filled with a resin material and then opened enough to achieve a desired foam size.

- Advantageous Effects of Invention

The present invention can provide a thermally expandable microcapsule that has excellent heat resistance and compression resistance and that enables the production of a foam molded article that is less likely to undergo deterioration or appearance defects over a long period of time, as well as a foamable masterbatch and a foam molded article each produced using the thermally expandable microcapsule.

DESCRIPTION OF EMBODIMENTS

Embodiments of the present invention are more specifically described in the following with reference to, but not limited to, examples.

(Example 1)

(Preparation of thermally expandable microcapsule)

Six parts by weight of carbon black [CB] as a black material, 19 parts by weight of colloidal silica (produced by Asahi Denka Co., Ltd., primary average particle size: 20 nm) as an inorganic compound, 0.8 parts by weight of polyvinylpyrrolidone (produced by BASF), and 1.8 parts by weight of 1 N hydrochloric acid were mixed with 250 parts by weight of ion-exchanged water. The mixture was then adjusted to a pH of 3.5 to prepare an aqueous dispersion medium.
The carbon black used was Aqua-Black #001 (produced by Tokai Carbon Co., Ltd., average particle size: 160 nm, specific surface area: 110 $m^2$/g, OD value: 3.0).
Separately, 59.7% by weight of acrylonitrile, 40% by weight of methacrylonitrile, and 0.3% by weight of ethylene glycol dimethacrylate were mixed to prepare a monomer composition in the form of a homogeneous solution. To 97 parts by weight of this monomer composition were added 0.8 parts by weight of a polymerization initiator (2,2'-azobisisobutyronitrile), 0.6 parts by weight of 2,2'-azobis(2,4-dimethylvaleronitrile), and 30 parts by weight of isopentane. They were fed into an autoclave and mixed.
Thereafter, the resulting mixture was added to the aqueous dispersion medium and suspended to prepare a dispersion.
The obtained dispersion was mixed and stirred in a homogenizer, fed into a nitrogen-purged pressure polymerizer, and reacted under pressure (0.5 MPa) at 60°C for 20 hours to give a reaction product. Filtration and water washing of the reaction product were repeated, followed by drying to give thermally expandable microcapsules.
The obtained thermally expandable microcapsules were added to and dispersed in an embedding resin (Technovit 4000, produced by Kulzer) to a particle content of 3% by weight to prepare a resin with embedded thermally expandable microcapsules. A thin film was prepared with a microtome (EM UC7, produced by LEICA) such that it passed near the centers of the thermally expandable microcapsules dispersed in the embedding resin, and observed with a transmission electron microscope (JEM-2100, produced by JEOL Ltd.) to determine the position of the black material. The black material was present on the particle surfaces.

(Examples 2 and 3)

Thermally expandable microcapsules were obtained as in Example 1 except that the monomer composition, the black material, and the inorganic compound were mixed according to the formulation shown in Table 1, and that 1.8 parts by weight of 1 N hydrochloric acid was not added.

(Examples 4 to 11, 13, and 14)

Thermally expandable microcapsules were obtained as in Example 1 except that the monomer composition, the black material, and the inorganic compound were mixed according to the formulation shown in Table 1.
In Example 9, titanium black [TB] (titanium black 13M-T, produced by Mitsubishi Materials Electronic Chemicals Co., Ltd., average particle size: 70 nm, specific surface area: 20 $m^2$/g, OD value: 2.5) was used as the black material.
In Example 10, iron oxide (BL-100, produced by Titan Kogyo, Ltd., average particle size: 400 nm, specific surface area: 6 $m^2$/g, OD value: 2.7) was used as the black material.
In Example 11, poly(3,4-ethylenedioxythiophene)-poly(styrene sulfonate) (PEDOT/PSS) [average particle size: 200 nm, specific surface area: 7 $m^2$/g, OD value: 1.4] was used as the black material.
In Example 13, carbon black (Aqua-Black #162, produced by Tokai Carbon Co., Ltd., average particle size: 110 nm, specific surface area: 110 $m^2$/g, OD value: 3.0) was used as the black material.
In Example 14, colloidal silica (produced by Asahi Denka Co., Ltd., primary average particle size: 60 nm) was used as the inorganic compound.

(Example 12)

In a polymerization reaction vessel, an aqueous solution containing 4.7 parts by weight of sodium hydroxide dissolved in 50 parts by weight of ion-exchanged water was gradually added, with stirring, to an aqueous solution containing 8.3 parts by weight of magnesium chloride dissolved in 263 parts by weight of ion-exchanged water, whereby an aqueous dispersion medium containing magnesium hydroxide colloid and having a pH of 9.5 was prepared. To the aqueous dispersion medium containing the magnesium hydroxide colloid was added 3 parts by weight of a carboxylic acid-modified PVA (weight average molecular weight 6,000) to prepare an aqueous dispersion medium containing the magnesium hydroxide colloid and the carboxylic acid-modified PVA. To the prepared aqueous dispersion medium was added 5 parts by weight of carbon black (Aqua-Black #001, produced by Tokai Carbon Co., Ltd.) as a black material (pH 9.5).

Subsequently, 0.8 parts by weight of a polymerization initiator (2,2'-azobisisobutyronitrile), 0.6 parts by weight of 2,2'-azobis(2,4-dimethylvaleronitrile), and 30 parts by weight of isopentane were added to 97 parts by weight of a monomer composition of the formulation shown in Table 1 to prepare an oily mixture liquid. This oily mixture liquid was added to the aqueous dispersion medium to prepare a dispersion. The obtained dispersion was mixed and stirred in a homogenizer, fed into a nitrogen-purged pressure polymerizer (20 L), and reacted under pressure (0.5 MPa) at 60°C for 20 hours to give a reaction product. Filtration and water washing of the reaction product were repeated, followed by drying to give thermally expandable microcapsules.

(Example 15)

Twenty-five parts by weight of colloidal silica (produced by Asahi Denka Co., Ltd., primary average particle size: 20 nm) as an inorganic compound and 0.8 parts by weight of polyvinylpyrrolidone (produced by BASF) were mixed with 250 parts by weight of ion-exchanged water to prepare an aqueous dispersion medium.

Separately, 20% by weight of acrylonitrile, 30% by weight of methacrylonitrile, 20% by weight of methyl methacrylate, and 30% by weight of methacrylic acid were mixed to prepare a monomer composition in the form of a homogeneous solution. To 97 parts by weight of this monomer composition were added 0.0026 parts by weight of an amine salt of polyether ester acid (DISPARLON-234, produced by Kusumoto Chemicals, Ltd.) as an additive and 0.013 parts by weight of carbon black as a black material, and they were fed into an autoclave. Further, 0.8 parts by weight of a polymerization initiator (2,2'-azobisisobutyronitrile), 0.6 parts by weight of 2,2'-azobis(2,4-dimethylvaleronitrile), 20 parts by weight of isopentane, and 10 parts by weight of isooctane were added and mixed in the autoclave.

The carbon black used was produced by Mitsubishi Chemical Corporation (MA100, primary average particle size 24 nm, specific surface area 110 $m^2/g$).

Thereafter, the resulting mixture was added to the aqueous dispersion medium and suspended to prepare a dispersion.

The obtained dispersion was stirred in a homogenizer, fed into a nitrogen-purged pressure polymerizer, and reacted under pressure (0.5 MPa) at 60°C for 20 hours to give a reaction product. Filtration and water washing of the reaction product were repeated, followed by drying to give thermally expandable microcapsules.

The obtained thermally expandable microcapsules were added to an embedding resin (Technovit 4000, produced by Kulzer) to a particle content of 3% by weight and dispersed to prepare a resin with embedded thermally expandable microcapsules. A thin film was prepared with a microtome (EM UC7, produced by LEICA) such that it passed near the centers of the thermally expandable microcapsules dispersed in the embedding resin, and observed with a transmission electron microscope (JEM-2100, produced by JEOL Ltd.) to determine the position of the black material. The black material was present within the shells.

(Examples 16 to 20)

Thermally expandable microcapsules were obtained as in Example 15 except that the black material and the additive were mixed in accordance with the formulation shown in Table 2.

(Examples 21 to 24 and 26)

Thermally expandable microcapsules were obtained as in Example 18 except that the monomer composition, the black material, and the additive were mixed in accordance with the formulation shown in Table 2.

In Example 21, carbon black (#2600, produced by Mitsubishi Chemical Corporation, primary average particle size 13 nm, specific surface area 370 $m^2/g$) was used as the black material.

In Example 22, carbon black (#52, produced by Mitsubishi Chemical Corporation, primary average particle size 27 nm, specific surface area 88 $m^2/g$) was used as the black material.

In Example 23, carbon black (#33, produced by Mitsubishi Chemical Corporation, primary average particle size 30 nm, specific surface area 74 $m^2/g$) was used as the black material.

In Example 24, 2.4 parts by weight of Floren DOPA-15BHFS (produced by Kyoeisha Chemical Co., Ltd.) was used as the additive.

In Example 26, 3.9 parts by weight of a black dye (ChuoBrack F5, trade name Solvent Black 7, produced by Chuo Synthetic Chemical Co., Ltd.) was used as the black material.

(Example 25)

Thermally expandable microcapsules were obtained as in Example 18 except that the monomer composition, the black material, and the inorganic compound were mixed in accordance with the formulation shown in Table 2, and that 1.8 parts by weight of 1 N hydrochloric acid was added.

(Comparative Example 1)

Thermally expandable microcapsules were obtained as in Example 1 except that no black material was added.

(Comparative Examples 2 and 3)

Thermally expandable microcapsules were obtained as in Comparative Example 1 except that the monomer composition and the inorganic compound were mixed in accordance with the formulation shown in Table 2, and that 1.8 parts by weight of 1 N hydrochloric acid was not added.

(Evaluation methods)

The properties of the obtained thermally expandable microcapsules were evaluated by the following methods. Tables 1 and 2 show the results.

(1) Evaluation of thermally expandable microcapsules

(1-1) Measurement of volume average particle size

The volume average particle size of the obtained thermally expandable microcapsules was measured using a laser diffraction/scattering particle size distribution analyzer (LS 13 320, produced by Beckman Coulter).

(1-2) Measurement of optical density (OD value)

The obtained thermally expandable microcapsules were mixed with an acrylic resin (DPE-6A, dipentaerythritol hexaacrylate, produced by Kyoeisha Chemical Co., Ltd.) at 1:1 to prepare a measurement sample. The measurement sample was applied to a glass substrate (10 cm × 10 cm) by spin coating to a dried film thickness of 50 μm, and dried in an oven at 70°C for 15 minutes to prepare a coating film. The optical density (OD value) of the coating film was measured with a Macbeth densitometer (X-Rite 361T, produced by Sakata Inx Eng. Co., Ltd.). The OD value represents light-shielding properties. A greater OD value indicates that a better foam molded article with higher light-shielding properties can be obtained.

(1-3) Heat resistance

A small amount of the thermally expandable microcapsules were spread on a stage of a heat-foaming microscope (produced by Japan High Tech Co., Ltd.). While the microcapsules were heated at 5°C/min, the expansion behavior was observed until 280°C. With the diameter of an unexpanded thermally expandable microcapsule taken as 1 time, the expansion ratio D220 at 220°C was determined and evaluated in accordance with the following criteria.

less than 3 times: × (poor)
3 times or more but less than 4 times: ○ (acceptable)
4 times or more but less than 5 times: ○○ (good)
5 times or more: ○○○ (very good)

(1-4) Durability

The expansion behavior was observed using a heat-foaming microscope (produced by Japan High Tech Co., Ltd.) under the same conditions as the heat resistance evaluation. The temperature width (ΔT) in which the expansion ratio is 2 times or more was determined and evaluated in accordance with the following criteria.

less than 40°C: × (poor)
40°C or more but less than 50°C: ○ (acceptable)
50°C or more but less than 60°C: ○○ (good)
60°C or more: ○○○ (very good)

(1-5) Compression resistance

The thermally expandable microcapsules were expanded by heating to a heating temperature of 180°C at a temperature increase rate of 30°C/min at a load of 0.01 mN using a thermomechanical analyzer (TMA) (TMA2940, produced by TA Instruments). The expansion displacement at this time was taken as 100%. Thereafter, the rate of decrease in expansion displacement when a load was increased to 0.1 mN was measured and evaluated in accordance with the following criteria.

less than 30%: ○○○○ (Excellent)
300 or more but less than 50%: ○○○ (very good)
500 or more but less than 60%: oo (good)
600 or more but less than 70%: o (acceptable)
700 or more: × (poor)

(1-6) Foaming starting temperature, maximum displacement, and maximum foaming temperature

The foaming starting temperature (Ts), the maximum displacement (Dmax), and the maximum foaming temperature (Tmax) were measured with a thermomechanical analyzer (TMA) (TMA2940, produced by TA Instruments). Specifically, 25 μg of a sample was placed in an aluminum container having a diameter of 7 mm and a depth of 1 mm and heated at a temperature increase rate of 5°C/min from 80°C to 220°C with a force of 0.1 N applied from above. The displacement was measured in the perpendicular direction of a measuring terminal. The temperature at which the displacement began to increase was defined as the foaming starting temperature. The maximum value of the displacement was defined as the maximum displacement. The temperature at which the maximum displacement was obtained was defined as the maximum foaming temperature.

(1-7) Measurement of ash content

The obtained thermally expandable microcapsules were weighed (weight: A parts by weight) and put in a crucible for ash content measurement. The microcapsules were heated with an electric heater at 750°C for 180 minutes and turned into ash. The obtained ash was weighed (weight: B parts by weight). From the obtained A parts by weight and B parts by weight, the ash content C (% by weight) was calculated using the following equation.

$$C\ (\%\ by\ weight)\ =\ (B/A)\ \times\ 100$$

(1-8) Measurement of black material content

Using a thermogravimetry-differential thermal analyzer (TA7200, produced by Hitachi High-Tech Science Corporation), 1.0 mg of the obtained thermally expandable microcapsules were heated in a nitrogen atmosphere to 600°C at 10°C/min, held for 10 minutes, cooled to 400°C at 10°C/min, and held for 10 minutes. The atmosphere was then changed to the air. The thermally expandable microcapsules were heated in the air to 1,000°C and held for 10 minutes at 1,000°C, and the weight loss from 400°C to 1,000°C was measured. The weight loss was used as the high-temperature combustible content.
Separately, the high-temperature combustible content of thermally expandable microcapsules containing the same components but no black material was measured. The difference between the high-temperature combustible content of the thermally expandable microcapsules containing a black material and the high-temperature combustible content of the thermally expandable microcapsules containing no black material was calculated as the black material content.

(2) Evaluation of foam molded article

(2-1) Evaluation of appearance (white spots)

[Preparation of foam molded article (Examples 1, 4, 7 to 14, and 25 and Comparative Example 1)]
Five grams of the thermally expandable microcapsules obtained in one of Examples 1, 4, 7 to 14, and 25 and Comparative Example 1, 193 g of an SBS resin (TR-1600, produced by JSR Corporation), and 2 g of a black pigment (PBF-640, produced by Resino Color Industry Co., Ltd.) were weighed and mixed in a cup. The mixture was formed into a rolled sheet using an 8-inch roll mill (191-TM, produced by Yasuda Seiki Seisakusho, Ltd.) at 130°C. This rolled sheet was cut and heated with a press machine (PA-40E/40C, produced by Kodaira Seisakusho Co., Ltd.) at 170°C to prepare a foam molded article.

[Preparation of foam molded article (Examples 2, 3, 5, 6, 15 to 24, and 26 and Comparative Examples 2 and 3)]

Five grams of the thermally expandable microcapsules obtained in one of Examples 2, 3, 5, 6, 15 to 24, and 26 and Comparative Examples 2 and 3 and 195 g of a TPV resin (elastomer 7030BS, produced by Mitsui Chemicals, Inc.) were weighed and mixed in a cup. The mixture was formed into a rolled sheet using an 8-inch roll mill (191-TM, produced by Yasuda Seiki Seisakusho, Ltd.) at 110°C. This rolled sheet was cut and heated with a press machine (PA-40E/40C, produced by Kodaira Seisakusho Co., Ltd.) at 205°C to prepare a foam molded article.

[Evaluation of appearance (white spots)]

The number of white spots was counted on the surface (1 mm square) of each of the foam molded articles using an optical microscope and evaluated in accordance with the following criteria.

less than 10: ○○○ (very good)
10 or more but less than 40: ○○ (good)
40 or more but less than 70: o (acceptable)
70 or more: × (poor)

(2-2) Evaluation of appearance (color difference)

The L*, a*, b* values were measured using a chroma meter (CM-26dG, produced by Konica Minolta, Inc.) at randomly selected five sites on each of the foam molded article samples. The average of the color difference from a base resin to which no particle was added, $\Delta E^*ab = \sqrt{(\Delta L^*)^2 + (\Delta a^*)^2 (\Delta b^*)^2}$, was calculated and evaluated in accordance with the following criteria.

less than 1.5: ○○○ (very good)
1.5 or more but less than 2.0: ○○ (good)
2.0 or more but less than 2.5: ○ (acceptable)
2.5 or more but less than 3.0: △ (fair)
3.0 or more: × (poor)

[Table 1a]

| | | | Example | | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 |
| Black material (aqueous dispersion) | Type | | CB | CB | CB | CB | CB | CB | CB | CB | TB | Iron oxide | PEDOT | CB | CB | CB |
| | Average particle size (nm) | | 160 | 160 | 160 | 160 | 160 | 160 | 160 | 160 | 70 | 400 | 200 | 160 | 110 | 160 |
| | Addition amount (parts by weight) [black material only] | | 1.2 | 1.2 | 1.2 | 0.04 | 3.8 | 8.6 | 0.12 | 6 | 1.2 | 1.2 | 1.2 | 1.2 | 1.2 | 1.2 |
| Inorganic compound | Type | | Si | Si | Si | Si | Si | Si | Si | Si | Si | Si | Si | Mg | Si | Si |
| | Primary average particle size (nm) | | 2Ω | 20 | 20 | 20 | 20 | 20 | 20 | 20 | 20 | 20 | 20 | 20 | 20 | 60 |
| | Addition amount (parts by weight) [inorganic compound only) | | 3.8 | 3.8 | 3.8 | 8.6 | 1.2 | 0.04 | 7.6 | 3.8 | 3.8 | 3.8 | 3.8 | 2.6 | 3.8 | 3.8 |
| Monomer composition | Nitrile monomer | Acrylonitrile | 59.7 | 20 | 19.48 | 59.7 | 59.7 | 59.7 | 59.7 | 59.7 | 59.7 | 59.7 | 59.7 | 59.7 | 59.7 | 59.7 |
| | | Methacrylonitrile | 40 | 30 | 29.22 | 40 | 40 | 40 | 40 | 40 | 40 | 40 | 40 | 40 | 40 | 40 |
| | Carboxy group-containing monomer | Methacrylic acid | 0 | 30 | 30 | 0 | 0 | 0 | 0 | 0 | 0 | 0 | 0 | 0 | 0 | 0 |
| | Crosslinkable monomer | Ethylene glycol dimethacrylate | 0.3 | 0 | 0.3 | 0.3 | 0.3 | 0.3 | 0.3 | 0.3 | 0.3 | 0.3 | 0.3 | 0.3 | 0.3 | 0.3 |
| | Different monomer | Methyl methacrylate | 0 | 20 | 20 | 0 | 0 | 0 | 0 | 0 | 0 | 0 | 0 | 0 | 0 | 0 |
| | Thermosetting resin | Bisphenol A epoxy resin | 0 | 0 | 1 | 0 | 0 | 0 | 0 | 0 | 0 | 0 | 0 | 0 | 0 | 0 |
| Black material (Hydrophobic) | Type | | - | - | - | - | - | - | - | - | - | - | - | - | - | - |
| | Average particle size (nm) | | - | - | - | - | - | - | - | - | - | - | - | - | - | - |
| | Addition amount (parts by weight) [black material only] | | - | - | - | - | - | - | - | - | - | - | - | - | - | - |
| Additive (dispersant for black material) | | | - | - | - | - | - | - | - | - | - | - | - | - | - | - |

(continued)

| | | Example | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Volatile expansion agent | Isopentane | 30 | 30 | 30 | 30 | 30 | 30 | 30 | 30 | 30 | 30 | 30 | 30 | 30 | 30 |
| | Isooctane | 0 | 0 | 0 | 0 | 0 | 0 | 0 | 0 | 0 | 0 | 0 | 0 | 0 | 0 |
| Production method | Aqueous dispersion medium pH | 3.5 | 8 | 8 | 3.5 | 3.5 | 3.5 | 3.5 | 3.5 | 3.5 | 3.5 | 3.5 | 9.5 | 3.5 | 3.5 |
| Amount of black material fed (% by weight) | | 1 | 1 | 1 | 0.03 | 3 | 6.8 | 0.1 | 4.7 | 1 | 1 | 1 | 1 | 1 | 1 |
| inorganic compound content (% by weight) [B]* | | 3 | 3 | 3 | 6.8 | 1 | 0.03 | 6 | 3 | 3 | 3 | 3 | 2 | 3 | 3 |
| Black material content (% by weight) [A]* | | 0.51 | 0.58 | 0.59 | 0.01 | 2.43 | 5.07 | 0.08 | 4.01 | 0.54 | 0.51 | 0.54 | 0.55 | 0.44 | 0.49 |
| High-temperature combustible content (% by weight) | | 5.39 | 5.46 | 5.47 | 4.89 | 7.31 | 9.95 | 4.96 | 8.89 | 5.42 | 5.39 | 5.42 | 5.43 | 5.32 | 5.37 |
| Position of black material | | Particle surface | Particle surface | Particle surface | Particle surface | Particle surface | Particle surface | Particle surface | Particle surface | Particle surface | Particle surface | Particle surface | Particle surface | Particle surface | Particle surface |
| *: the content relative to the amount of thermally expandable microcapsules | | | | | | | | | | | | | | | |

EP 4 144 798 A1

[Table 1b]

| | | Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Evaluation | Volume average particle size ($\mu$m) | 26.8 | 26.5 | 26.6 | 26.3 | 26.7 | 26.6 | 26.8 | 26.7 | 26.9 | 26.5 | 26.7 | 26.4 | 26.5 | 26.7 |
| | Optical density (OD value) | 1.6 | 1.6 | 1.6 | 0.5 | 2.2 | 2.5 | 0.6 | 2.4 | 1.3 | 1.4 | 1 | 1.6 | 1.6 | 1.6 |
| | Heat resistance — Measurement value | 3.4 | 4.3 | 4.6 | 3 | 3.5 | 3.8 | 3.1 | 3.2 | 3.2 | 3.4 | 3 | 3.4 | 3.5 | 3.4 |
| | Heat resistance — Evaluation | ○ | ○○ | ○○ | ○ | ○ | ○ | ○ | ○ | ○ | ○ | ○ | ○ | ○ | ○ |
| | Durability — Measurement value | 52 | 55 | 94 | 42 | 54 | 56 | 42 | 44 | 42 | 50 | 42 | 52 | 54 | 52 |
| | Durability — Evaluation | ○○ | ○○ | ○○○ | ○ | ○○ | ○○ | ○ | ○ | ○ | ○○ | ○ | ○○ | ○○ | ○○ |
| | Compression resistance — Measurement value | 58 | 47 | 27 | 69 | 48 | 54 | 69 | 59 | 67 | 69 | 69 | 59 | 57 | 58 |
| | Compression resistance — Evaluation | ○○ | ○○○ | ○○○○ | ○ | ○○○ | ○○ | ○ | ○○ | ○ | ○ | ○ | ○○ | ○○ | ○○ |
| | Ts — Measurement value [°C] | 137 | 160 | 155 | 137 | 137 | 137 | 137 | 137 | 137 | 137 | 137 | 137 | 137 | 137 |
| | Tmax — Measurement value [°C] | 186 | 211 | 214 | 177 | 192 | 194 | 178 | 182 | 179 | 185 | 177 | 178 | 189 | 186 |
| | Dmax — Measurement value [$\mu$m] | 891 | 1013 | 1045 | 863 | 828 | 784 | 863 | 863 | 861 | 888 | 861 | 873 | 906 | 891 |
| | Ash content — Measurement value [% by weight] | 3.2 | 3.2 | 3.2 | 6.8 | 1.2 | 0.07 | 6 | 3 | 3.2 | 4.1 | 3.1 | 1.9 | 3.2 | 3.2 |
| | Appearance (white spots) — Measurement value | 6 | 3 | 2 | 65 | 2 | 1 | 58 | 31 | 10 | 6 | 16 | 6 | 3 | 6 |
| | Appearance (white spots) — Evaluation | ○○○ | ○○○ | ○○○ | ○ | ○○○ | ○○○ | ○ | ○○ | ○○ | ○○○ | ○○ | ○○○ | ○○○ | ○○○ |
| | Appearance ($\Delta$E*ab value) — Measurement value | 1.67 | 1.7 | 1.71 | 2.9 | 1.75 | 1.31 | 2.44 | 1.43 | 1.92 | 1.66 | 1.98 | 1.74 | 1.69 | 1.73 |
| | Appearance ($\Delta$E*ab value) — Evaluation | ○○ | ○○ | ○○ | Δ | ○○ | ○○○ | ○ | ○○○ | ○○ | ○○ | ○○ | ○○ | ○○ | ○○ |

[Table 2a]

| | | | Example | | | | | | | | | | | | | Comparative Example | | |
|---|---|---|---|---|---|---|---|---|---|---|---|---|---|---|---|---|---|---|---|
| | | | 15 | 16 | 17 | 18 | 19 | 20 | 21 | 22 | 23 | 24 | 25 | 26 | 1 | 2 | 3 |
| Black material (aqueous dispersion) | Type | | - | - | - | - | - | - | - | - | - | - | - | - | - | - | - |
| | Average particle size (nm) | | - | - | - | - | - | - | - | - | - | - | - | - | - | - | - |
| | Addition amount (parts by weight) [black material only] | | - | - | - | - | - | - | - | - | - | - | - | - | - | - | - |
| Inorganic compound | Type | | Si | Si | Si | Si | Si | Si | Si | Si | Si | Si | Si | Si | Si | Si | Si |
| | Primary average particle size (nm) | | 20 | 20 | 20 | 20 | 20 | 20 | 20 | 20 | 20 | 20 | 20 | 20 | 20 | 20 | 20 |
| | Addition amount (parts by weight) [inorganic compound only] | | 5 | 5 | 5 | 5 | 5 | 5 | 5 | 5 | 5 | 5 | 5 | 5 | 5 | 5 | 5 |
| Monomer composition | Nitrile monomer | Acrylonitrile | 20 | 20 | 20 | 20 | 20 | 20 | 20 | 20 | 20 | 20 | 55 | 20 | 59.7 | 20 | 19.48 |
| | | Methacrylonitrile | 30 | 30 | 30 | 30 | 30 | 30 | 30 | 30 | 30 | 30 | 35 | 30 | 40 | 30 | 29.22 |
| | Carboxy group-containing monomer | Methacrylic acid | 30 | 30 | 30 | 30 | 30 | 30 | 30 | 30 | 30 | 30 | 0 | 30 | 0 | 30 | 30 |
| | Crosslinkable monomer | Ethylene glycol dimethacrylate | 0 | 0 | 0 | 0 | 0 | 0 | 0 | 0 | 0 | 0 | 5 | 0 | 0.3 | 0 | 0.3 |
| | Different monomer | Methyl methacrylate | 20 | 20 | 20 | 20 | 20 | 20 | 20 | 20 | 20 | 20 | 5 | 20 | 0 | 20 | 20 |
| | Thermosetting resin | Bisphenol A epoxy resin | 0 | 0 | 0 | 0 | 0 | 0 | 0 | 0 | 0 | 0 | 0 | 0 | 0 | 0 | 1 |
| Black material (Hydrophobic) | Type | | CB | CB | CB | CB | CB | CB | CB | CB | CB | CB | CB | Black dye | - | - | - |
| | Average particle size (nm) | | 150 | 150 | 150 | 150 | 150 | 150 | 80 | 200 | 350 | 150 | 150 | - | - | - | - |
| | Addition amount (parts by weight) [black material only] | | 0.013 | 0.13 | 1.3 | 3.8 | 6.4 | 12.7 | 3.8 | 3.8 | 3.8 | 3.8 | 3.8 | 3.8 | - | - | - |
| Additive (dispersant for black material) | | | 0.0026 | 0.026 | 0.25 | 0.76 | 1.27 | 2.54 | 0.76 | 0.76 | 0.76 | 0.76 | 0.76 | - | - | - | - |

EP 4 144 798 A1

(continued)

| | | Example | | | | | | | | | | | | Comparative Example | | |
|---|---|---|---|---|---|---|---|---|---|---|---|---|---|---|---|---|
| | | 15 | 16 | 17 | 18 | 19 | 20 | 21 | 22 | 23 | 24 | 25 | 26 | 1 | 2 | 3 |
| Volatile expansion agent | Isopentane | 20 | 20 | 20 | 20 | 20 | 20 | 20 | 20 | 20 | 20 | 20 | 20 | 30 | 20 | 30 |
| | Isooctane | 10 | 10 | 10 | 10 | 10 | 10 | 10 | 10 | 10 | 10 | 10 | 10 | 0 | 10 | 0 |
| Production method | Aqueous dispersion medium pH | 8 | 8 | 8 | 8 | 8 | 8 | 8 | 8 | 8 | 8 | 3.5 | 8 | 35 | 8 | 8 |
| Amount of black material fed (% by weight) | | 0.01 | 0.1 | 1 | 3 | 5 | 10 | 3 | 3 | 3 | 3 | 3 | 3 | - | - | - |
| Inorganic compound content (% by weight)[B]* | | 3.8 | 3.8 | 3.8 | 3.8 | 3.8 | 3.8 | 3.8 | 3.8 | 3.8 | 3.8 | 3.8 | 3.8 | 3.8 | 3.8 | 3.8 |
| Black material content (% by weight) [A]* | | 0.01 | 0.09 | 0.96 | 3.04 | 5.02 | 9.98 | 3.06 | 3.01 | 2.97 | 2.99 | 2.98 | - | 0 | 0 | 0 |
| High-temperature combustible content (% by weight) | | 4.89 | 4.97 | 5.84 | 7.92 | 9.90 | 1486 | 7.94 | 7.89 | 7.85 | 7.87 | 7.86 | - | 4.87 | 4.88 | 4.88 |
| Position of black material | | Within shell | Within shell | Within shell | Within shell | Within shell | Within shell | Within shell | Within shell | Within shell | Core-shell interface | Within shell | Within shell | - | - | - |
| *: the content relative to the amount of thermally expandable microcapsules | | | | | | | | | | | | | | | | |

[Table 2b]

| Evaluation | | | Example | | | | | | | | | | | | Comparative Example | | |
|---|---|---|---|---|---|---|---|---|---|---|---|---|---|---|---|---|---|
| | | | 15 | 16 | 17 | 18 | 19 | 20 | 21 | 22 | 23 | 24 | 25 | 26 | 1 | 2 | 3 |
| | Volume average particle size ($\mu$m) | | 26.5 | 26.5 | 26.7 | 26.4 | 26.9 | 27.0 | 26.8 | 26.5 | 26.7 | 26.6 | 25.9 | 26.3 | 26.4 | 26.5 | 26.8 |
| | Optical density (OD value) | | 0.5 | 0.6 | 1.4 | 2.2 | 2.4 | 3.4 | 2.5 | 2.2 | 2 | 2.2 | 2.2 | 2 | 0.1 | 0.1 | 0.1 |
| | Heat resistance | Measurement value | 4.3 | 4.4 | 4.2 | 4.3 | 4.6 | 4.5 | 4.3 | 4.2 | 4.5 | 4.2 | 3.3 | 4.3 | 2.4 | 3.8 | 4.2 |
| | | Evaluation | ○○ | ○○ | ○○ | ○○ | ○○ | ○○ | ○○ | ○○ | ○○ | ○○ | ○ | ○○ | × | ○ | ○○ |
| | Durability | Measurement value | 54 | 55 | 60 | 62 | 61 | 62 | 63 | 61 | 60 | 62 | 43 | 61 | 22 | 28 | 58 |
| | | Evaluation | ○○ | ○○ | ○○○ | ○○○ | ○○○ | ○○○ | ○○○ | ○○○ | ○○○ | ○○○ | ○ | ○○ | × | × | ○○ |
| | Compression resistance | Measurement value | 46 | 48 | 30 | 29 | 28 | 27 | 28 | 29 | 29 | 28 | 65 | 48 | 99 | 84 | 72 |
| | | Evaluation | ○○○ | ○○○ | ○○○ | ○○○○ | ○○○○ | ○○○○ | ○○○○ | ○○○○ | ○○○○ | ○○○○ | ○ | ○○○ | × | × | × |
| | Ts | Measurement value [°C] | 164 | 165 | 163 | 168 | 164 | 160 | 169 | 166 | 164 | 163 | 140 | 167 | 133 | 160 | 150 |
| | Tmax | Measurement value [°C] | 215 | 214 | 213 | 215 | 212 | 210 | 216 | 214 | 213 | 212 | 178 | 215 | 176 | 212 | 204 |
| | Dmax | Measurement value [$\mu$m] | 870 | 768 | 720 | 815 | 725 | 637 | 974 | 912 | 856 | 1100 | 978 | 885 | 861 | 824 | 935 |
| | Ash content | Measurement value [% by weight] | 4 | 4.1 | 4.3 | 4.3 | 4.5 | 4.6 | 4.2 | 4.3 | 4.1 | 4.2 | 4.1 | 4 | 4 | 4 | 4 |
| | Appearance (white spots) | Measurement value | 63 | 52 | 4 | 3 | 2 | 2 | 2 | 3 | 4 | 3 | 2 | 5 | 95 | 83 | 73 |
| | | Evaluation | ○ | ○ | ○○○ | ○○○ | ○○○ | ○○○ | ○○○ | ○○○ | ○○○ | ○○○ | ○○○ | ○○○ | × | × | × |
| | Appearance ($\Delta$E'ab value) | Measurement value | 2.89 | 2.32 | 1.98 | 1.45 | 1.32 | 0.8 | 1.24 | 1.42 | 1.49 | 1.46 | 1.49 | 1.47 | 3.8 | 3.92 | 3.96 |
| | | Evaluation | △ | ○○ | ○○ | ○○○ | ○○○ | ○○○ | ○○○ | ○○○ | ○○○ | ○○○ | ○○○ | ○○○ | × | × | × |

INDUSTRIAL APPLICABILITY

The present invention can provide a thermally expandable microcapsule that has excellent heat resistance and compression resistance and that enables the production of a foam molded article that is less likely to undergo deterioration or appearance defects over a long period of time, as well as a foamable masterbatch and a foam molded article each produced using the thermally expandable microcapsule.

**Claims**

1. A thermally expandable microcapsule comprising:

   a shell; and
   a volatile expansion agent as a core agent encapsulated by the shell,
   the shell containing a black material and a polymer compound.

2. The thermally expandable microcapsule according to claim 1,
   wherein the black material contains at least one selected from the group consisting of a black pigment, a black dye, and a black conductive polymer.

3. The thermally expandable microcapsule according to claim 2,
   wherein the black pigment is at least one selected from the group consisting of a carbonous black pigment and an oxide black pigment.

4. The thermally expandable microcapsule according to claim 2,
   wherein the black dye is an organic black dye.

5. The thermally expandable microcapsule according to any one of claims 1 to 4, having a black material content of 0.01 to 30% by weight relative to the thermally expandable microcapsule as a whole.

6. The thermally expandable microcapsule according to any one of claims 1 to 5, further comprising at least one inorganic compound selected from the group consisting of a Si compound and a Mg compound.

7. The thermally expandable microcapsule according to claim 6,
   wherein the Si compound contains an oxide, hydroxide, carbonate, or hydrogencarbonate of silicon.

8. The thermally expandable microcapsule according to claim 6,
   wherein the Mg compound contains an oxide, hydroxide, carbonate, or hydrogencarbonate of magnesium.

9. The thermally expandable microcapsule according to any one of claims 6 to 8, having an inorganic compound content of 0.01 to 7% by weight relative to the thermally expandable microcapsule as a whole.

10. The thermally expandable microcapsule according to any one of claims 6 to 9, having a weight ratio of the inorganic compound to the black material (inorganic compound/black material) of 0.001 to 400.

11. The thermally expandable microcapsule according to any one of claims 1 to 10,
    wherein the black material is contained within the shell.

12. The thermally expandable microcapsule according to any one of claims 1 to 11, having an optical density (OD value) of 0.5 or more.

13. A foamable masterbatch comprising:

    the thermally expandable microcapsule according to any one of claims 1 to 12; and
    a thermoplastic resin.

14. A foam molded article produced using the thermally expandable microcapsule according to any one of claims 1 to 12 or the foamable masterbatch according to claim 13.

## INTERNATIONAL SEARCH REPORT

International application No.

**PCT/JP2021/017197**

### A. CLASSIFICATION OF SUBJECT MATTER

*C08L 65/00*(2006.01)i; *C09K 3/00*(2006.01)i; *B01J 13/18*(2006.01)i
FI: B01J13/18; C08L65/00; C09K3/00 111B

According to International Patent Classification (IPC) or to both national classification and IPC

### B. FIELDS SEARCHED

Minimum documentation searched (classification system followed by classification symbols)

C08L65/00; C09K3/00; B01J13/18

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2007/049616 A1 (BRIDGESTONE CORP.) 03 May 2007 (2007-05-03) claims 1, 12, paragraphs [0093]-[0096], [0208], [0209], invention example C7 | 1-3, 5-10, 12 |
| Y | | 4 |
| A | | 11 |
| X | JP 2013-18990 A (MATSUMOTO YUSHI SEIYAKU CO., LTD.) 31 January 2013 (2013-01-31) claim 1, paragraphs [0040]-[0046], [0048], [0104], example 8 | 1-3, 5-10, 12-14 |
| Y | | 4 |
| A | | 11 |
| Y | JP 46-30282 B1 (MINNESOTA MINING AND MANUFACTURING CO.) 03 September 1971 (1971-09-03) column 9, line 45 to column 10, line 6 | 4 |
| A | | 1-3, 5-14 |
| A | JP 2005-206765 A (SANYO CHEMICAL INDUSTRIES, LTD.) 04 August 2005 (2005-08-04) entire text | 1-14 |

☑ Further documents are listed in the continuation of Box C.　　☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 June 2021** | **06 July 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
| --- |
| **PCT/JP2021/017197** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2019/150951 A1 (MATSUMOTO YUSHI SEIYAKU CO., LTD.) 08 August 2019 (2019-08-08)<br>    entire text | 1-14 |
| A | US 2010/0327216 A1 (BASF SE) 30 December 2010 (2010-12-30)<br>    entire text | 1-14 |

Form PCT/ISA/210 (second sheet) (January 2015)

## INTERNATIONAL SEARCH REPORT
### Information on patent family members

International application No.

**PCT/JP2021/017197**

| Patent document cited in search report | | | Publication date (day/month/year) | Patent family member(s) | | | Publication date (day/month/year) |
|---|---|---|---|---|---|---|---|
| WO | 2007/049616 | A1 | 03 May 2007 | US claims 1, 11, paragraphs [0164]-[0169], [0331], invention example C7 | 2012/0080131 | A1 | |
| | | | | EP | 1952880 | A1 | |
| | | | | CN | 101351265 | A | |
| | | | | KR 10-2008-0077611 | | A | |
| JP | 2013-18990 | A | 31 January 2013 | US claim 1, paragraphs [0059]-[0066], [0068], [0159]-[0161], example 8 | 2009/0280328 | A1 | |
| | | | | US | 2012/0121907 | A1 | |
| | | | | WO | 2007/032436 | A1 | |
| | | | | EP | 1953184 | A1 | |
| | | | | CN | 101263183 | A | |
| | | | | KR 10-2008-0059205 | | A | |
| JP | 46-30282 | B1 | 03 September 1971 | (Family: none) | | | |
| JP | 2005-206765 | A | 04 August 2005 | (Family: none) | | | |
| WO | 2019/150951 | A1 | 08 August 2019 | (Family: none) | | | |
| US | 2010/0327216 | A1 | 30 December 2010 | WO entire text | 2009/112378 | A2 | |
| | | | | EP | 2262863 | A2 | |
| | | | | CN | 102066498 | A | |
| | | | | ES | 2438490 | T3 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S4226524 B

- WO 2019150951 A